# EUROPEAN PATENT APPLICATION

(11) **EP 1 808 247 A1**
(43) Date of publication of application: **18.07.2007**
(21) Application number: 06000760.6
(22) Date of filing: 14.01.2006
(51) Int. Cl.: B23C 5/10

(54) **Milling cutter**

(71) Applicant: YIH TROUN ENTERPRISE CO., LTD., Shinjuang City Taipei Hsien Taiwan (CN)
(72) Inventor: Chen, Li-Cheng, Shinjuang City Taipei Hsien (TW)
(74) Representative: Köhler, Walter

(57) **Abstract**

A milling cutter (10) has an axis (X), a head (11) and a body (12). The head (11) has multiple blades extending transversely out from the axis (X) and each blade has a cutting surface (111) parallel to the axis (X). The body (12) is formed integrally on and extends from the head (11), has a top end and multiple side edges and is tapered from the head (11) to the top end. The milling cutter (10) is able to define recesses or cutouts in a workpiece (20) without causing a rapid rise in temperature of the milling cutter (10) because the tapered body (12) never contacts the workpiece (20) during the cutting process.

## Description

### 1. Field of the Invention

The present invention relates to a milling cutter, and more particularly to a milling cutter that has a head always contacting the surface of a workpiece when the milling cutter operates and a body extending from the head and tapered.

### 2. Description of the Prior Art

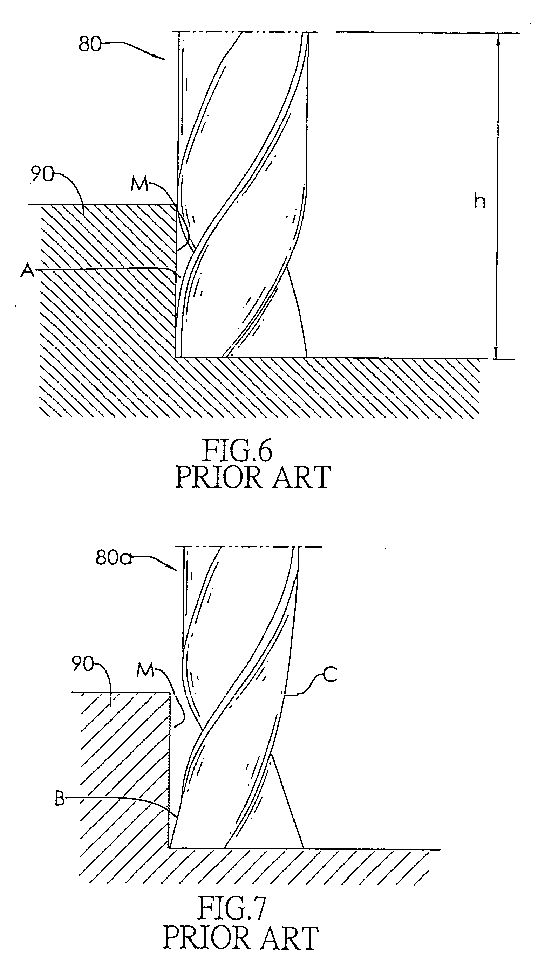

Milling machines generally have a milling cutter used to cut a workpiece. With reference to Fig. 6, a conventional milling cutter (80) has a longitudinal body, a free end (A), a fixed end mounted to a milling machine, a cross section and a side cutting face. The side cutting face has a length (h) and the cross section of the body is uniform in the extent of the length (h). Therefore, when the conventional milling cutter (80) cuts a workpiece (90), the side cutting face (h) continuously engages with side faces of the workpiece (90) so that the temperature of the milling cutter (80) increases rapidly during the operation. The milling cuter becomes easily damaged due to high temperature. In order to overcome the shortcoming of the conventional milling cutter (80) as shown in Fig. 6, an improved milling cutter (80a) is invented and introduced to the market, which is shown in Fig. 7. The improved milling cutter (80a) has a body (C), a free end (B) and a fixed end. However, the body (C) is tapered from the free end (B) to the fixed end, which means that the diameter of the free end is larger than that of other segment of the body (C). When the milling cutter (80a) cuts a workpiece (M), the free end contacts the side face of the workpiece at a point yet the tapered body (C) does not contact the side face of the workpiece (M). The temperature of the milling cutter (80a) increases slowly during operation due to the point contact between the free end and the workpiece and is durable. Consequently, the useful life of the improved milling cutter (80a) is prolonged. However, due to the tapered body of the milling cutter (80a), a rough appearance with a saw-toothed cross section is formed on the cut surface (M) of the workpiece (90) after the operation of the milling cutter.

To overcome the shortcomings, the present invention tends to provide an improved milling cutter to mitigate the aforementioned problems.

The primary objective of the present invention is to provide a milling cutter that has a head always contacting the surface of a workpiece when the milling cutter operates and a body extending from the head and tapered.

A milling cutter in accordance with the present invention comprises an axis, a head and a body.

The head has multiple blades extending transversely out from the axis and each blade has a cutting surface parallel to the axis.

The body is formed integrally on and extends from the head, has a top end and multiple side edges and is tapered from the head to the top end.

Other objects, advantages and novel features of the invention will become more apparent from the following detailed description when taken in conjunction with the accompanying drawings.

### IN THE DRAWINGS

Fig. 1 is a perspective view of a first embodiment of a milling cutter in accordance with the present invention;
Fig. 2 is a side view of the milling cutter in Fig. 1;
Fig. 3 is an operational side view of the milling cutter in Fig. 1 showing that the milling cutter is cutting a workpiece;
Fig. 4 is a side view of a second embodiment of a milling cutter in accordance with the present invention;
Fig. 5 is an enlarged side view of the milling cutter in Fig. 2 with an arcuate bottom face;
Fig. 6 is a side view of a conventional milling cutter in accordance with the prior art; and
Fig. 7 is a side view of another conventional milling cutter in accordance with the prior art.

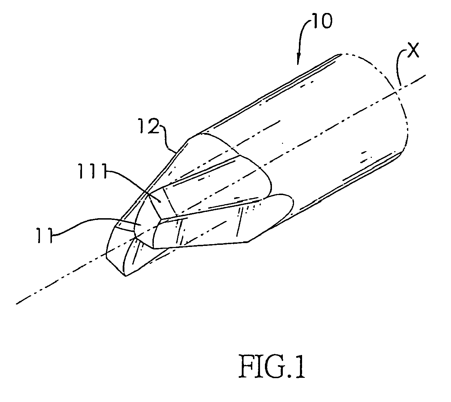

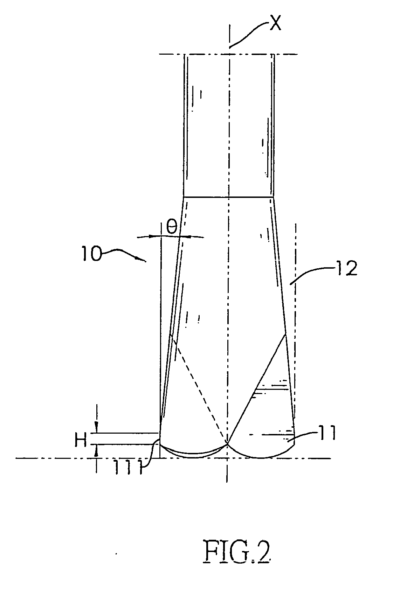

With reference to Figs. 1 and 2, a first embodiment of a milling cutter (10) in accordance with the present invention comprises an axis (X), a head (11) and a body (12) integrally formed with the head (11).

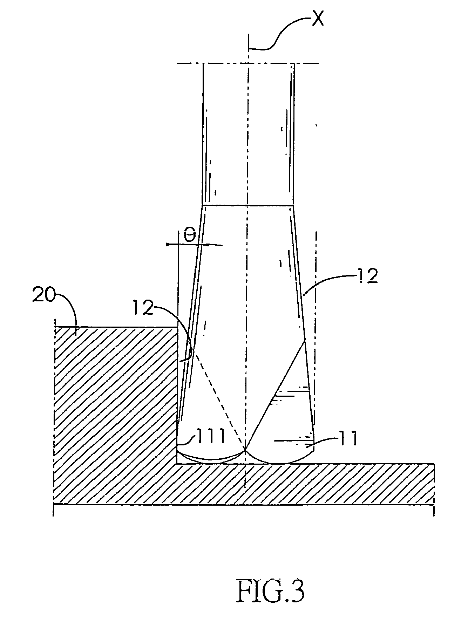

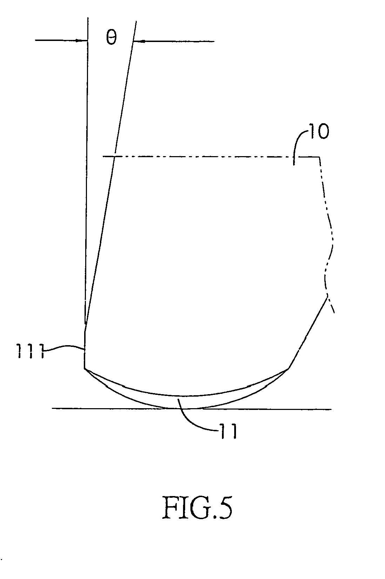

With further reference to Figs. 3 and 5, the head (11) has a top, a bottom and multiple blades. The blades extend transversely out from the axis (X) and each blade has a cutting surface (111) parallel to the axis (X) and a curved bottom. The curved bottoms of the blades make milling cutter (10) smoothly define recesses or cutouts in a workpiece (20). The cutting surface (111) of each blade has a height (H) in an extent from 5% to 50% of a distance between the axis (X) and the cutting surface (111). When the milling cutter (10) rotates and cuts the workpiece (20), the cutting surfaces (111) of the blades of the head (11) always contact a cut surface of the workpiece (20). The cut surface is smooth without a saw-toothed cross section due to the cutting surface (111) parallel to the axis (X).

The body (12) is formed integrally on and extends from a top of the head (11), has a bottom end formed on the top of the head (11), a top end and multiple side edges and is tapered from the head (11) to the top end. The side edges of the body (12) correspond to and are respectively formed with the cutting surface (111) of the head (11) and each side edge is inclined inward relative to the cutting surface (111) of the head (11) at an angle (θ). The angle is in an extent from 0° to 20°. A preferred extent of the angle is from 0° to 10 °. When the milling cutter (10) cuts the workpiece (20), the tapered body (12) does not contact the workpiece (20). Therefore, no friction causing an increase of the temperature of the milling cutter (10) is generated between the body (12) and the workpiece (20). The durability of the milling cutter (10) is improved.

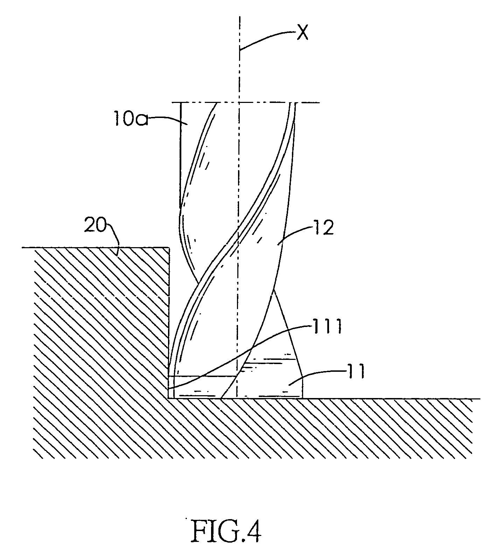

With reference to Fig. 4, a second embodiment of the milling cutter (10a) is similar to the first embodiment and has the body (12) being spiral.

Consequently, the milling cutter (10, 10a) of the present invention is able to define recesses or cutouts in a workpiece without causing a rapid rise in temperature of the milling cutter (10, 10a) because the tapered body (12) never contacts the workpiece (20) during the cutting process. Furthermore, cutting surfaces (111) of the head (11) are parallel to the axis (X) of the milling cutter (10, 10a) so that the cut surface defining of the workpiece (20) is smooth without a saw-toothed cross section.

Even though numerous characteristics and advantages of the present invention have been set forth in the foregoing description, together with details of the structure and function of the invention, the disclosure is illustrative only. Furthermore, changes may be made in detail, especially in matters of shape, size, and arrangement of parts within the scope of the appended claims.

## Claims

1. A milling cutter (10) comprising:
an axis (X);
a head (11) having a top, a bottom and multiple blades extending transversely out from the axis and each blade having a cutting surface (111) parallel to the axis (X); and
a body (12) integrally formed on and extending from a top of the head (11), having a bottom end formed on the top of the head (11), a top end and multiple side edges and tapered from the head (11) to the top end.

2. The milling cutter (10) as claimed in claim 1, wherein each blade of the head has a curved bottom.

3. The milling cutter (10) as claimed in claimed 2, wherein the cutting surface (111) of each blade of the head (11) has a height in an extent from 5% to 50% of a distance between the axis (X) and the cutting surface (111).
